# EUROPEAN PATENT SPECIFICATION

(11) **EP 1 488 645 B1**
(45) Date of publication and mention of the grant of the patent: **01.12.2010**
(21) Application number: 03745323.0
(22) Date of filing: 21.03.2003
(51) Int. Cl.: H04N 7/64, H04N 7/36, H04N 7/24

(54) **VIDEO CODING AND TRANSMISSION**
VIDEOKODIERUNG UND -ÜBERTRAGUNG
CODAGE ET EMISSION VIDEO

(30) Priority: 27.03.2002 EP 02252216
(43) Date of publication of application: 22.12.2004
(73) Proprietor: BRITISH TELECOMMUNICATIONS public limited company, London EC1A 7AJ (GB)
(72) Inventor: WALKER, Matthew, David, FELIXSTOWE, Suffolk IP11 9SN (GB)
(74) Representative: Nash, Roger William
(86) International application number: PCT/GB2003/001204
(87) International publication number: WO 2003/084244

(56) References cited:
- EP-A- 0 763 944
- EP-A- 1 120 966
- EP-A- 1 130 921
- WO-A-00/49810
- WO-A-02/054776
- WIEGAND T ET AL: "ERROR-RESILIENT VIDEO TRANSMISSION USING LONG-TERM MEMORY MOTION-COMPENSATED PREDICTION" IEEE JOURNAL ON SELECTED AREAS IN COMMUNICATIONS, IEEE INC. NEW YORK, US, vol. 18, no. 6, June 2000 (2000-06), pages 1050-1062, XP000915348 ISSN: 0733-8716
- SUGH-HOON LEE ET AL: "Retransmission scheme for MPEG streams in mission critical multimedia applications" EUROMICRO CONFERENCE, 1998. PROCEEDINGS. 24TH VASTERAS, SWEDEN 25-27 AUG. 1998, LOS ALAMITOS, CA, USA,IEEE COMPUT. SOC, US, 25 August 1998 (1998-08-25), pages 574-580, XP010298024 ISBN: 0-8186-8646-4
- KUREEREN R ET AL: "Synchronization-predictive coding for video compression: the sp frames design for jvt/h.26l" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY: IEEE, US, vol. 2 OF 3, 22 September 2002 (2002-09-22), pages 497-500, XP010608017 ISBN: 0-7803-7622-6

## Description

This invention relates to video coding. In particular this invention relates to a method and apparatus for transmitting video data, and a method and system for compensating for transmission errors in a video data stream.

A video sequence consists of a series of still pictures or frames. Video compression methods are based on reducing the redundant and perceptually irrelevant parts of video sequences. The redundancy in video sequences can be categorised into spectral, spatial and temporal redundancy. Spectral redundancy refers to the similarity between the different colour components of the same picture. Spatial redundancy results from the similarity between neighbouring pixels in a picture. Temporal redundancy exists because objects appearing in the previous image are also likely to appear in the current image. Compression can be achieved by taking advantage of this temporal redundancy and predicting the current picture from another picture, termed an anchor or reference picture. Further compression may be achieved by generating motion compensation data that describes the displacement between areas of the current picture and similar areas of the referenced picture.

Sufficient compression cannot usually be achieved by only reducing the inherent redundancy of the sequence. Thus, video encoders may also try to reduce the quality of those parts of the video sequence which are subjectively less important. In addition, the redundancy of the encoded bit-stream may be reduced by means of efficient loss of coding of compression parameters and coefficients. The main technique is to use variable length codes.

Video compression methods typically differentiate between pictures that utilise temporal redundancy reduction and those that do not. Compressed pictures that do not utilise temporal redundancy reduction methods are usually called INTRA-frames, I-frames or I-pictures. Temporally predicted images are usually forwardly predicted from a picture occurring before the current picture and are called INTER or P-frames. In the INTER-frame case, the current picture is predicted from a reference picture, usually using a motion compensation technique, so generating prediction error data representing the differences between the two frames.

A compressed video clip typically consists of a sequence of pictures, which can be roughly categorised into temporally independent INTRA pictures and temporally differentially coded INTER pictures. As the compression efficiency in INTRA pictures is normally lower than INTER pictures, INTRA pictures are used sparingly, especially in low-rate applications.

A video sequence may consist of a number of scenes or shots. The picture contents may be remarkably different from one scene to another, and therefore the first picture of the scene is typically INTRA-coded. There are frequent scene changes in television and film material, whereas scene cuts are relatively rare in video-conferencing. In addition, INTRA pictures may typically be inserted periodically to stop temporal propagation of transmission errors in a reconstructed video signal and/or to provide random access points to a video bit-stream.

Compressed video is easily corrupted by transmission errors, mainly for two reasons. Firstly, due to the utilisation of temporal predicted differential decoding (INTER frames), an error is propagated both spatially and temporally. In practice this means that, once an error occurs, it is easily visible to the human eye for a relatively long time. Especially susceptible are transmissions at low bit-rates where there are only a few INTRA-coded frames, so temporal error propagation is not stopped for some time. Secondly, the use of variable length codes increases the susceptibility to errors. When a bit error alters the code word, the decoder will lose code word synchronisation and also decode subsequent error-free code words (compressing several bits) incorrectly until the next synchronisation or start code. A synchronisation code is a bit pattern which cannot be generated from any legal combination of other code words and such codes are added to the bit-stream at intervals to enable re-synchronisation. In addition, errors occur when packets of data are lost during transmission which may produce visible errors in the image. For example, in video applications using the unreliable UDP transport protocol in IP networks, network elements may discard parts of the encoded video bit-stream.

There are many ways for the receiver to address the corruption introduced in the transmission path. In general, on receipt of a signal, transmission errors are first detected and then corrected or concealed by the receiver. Error correction refers to the process of recovering the erroneous data perfectly as if no errors had been introduced in the first place. Error concealment refers to the process of concealing the effect of transmission errors so that they are hardly visible in the reconstructed video sequence. Typically some amount of redundancy is added by the source or transport coding in order to help correct error detection, correction and concealment.

Current video coding standards define a syntax for a self-sufficient video bit-stream, for example ITU-T recommendation H.263, "Video Coding for Low Bit-Rate Communication". This standard defines a hierarchy for bit-steams and correspondingly for image sequences and images.

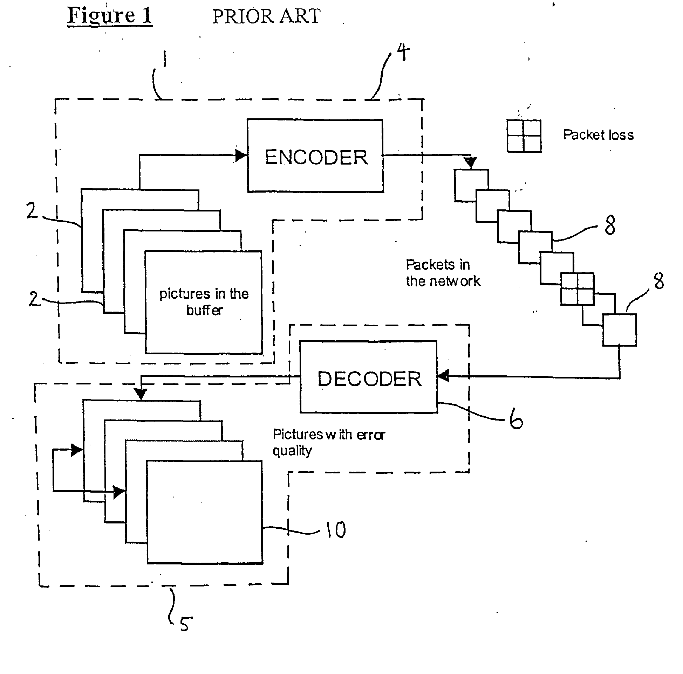

In conventional systems, as shown in Figure 1, to reduce bandwidth when transmitting a video signal between two points, it is common to compress the picture frames by exploiting the spatial differences within a frame and the temporal differences between frames. The resulting signal is termed the "play stream". The video signal is transmitted as a series of packets of information. The compression takes place in an encoder and the signal is then transmitted to a remote site where a decoder restores the image.

The loss or corruption of a packet of data will result in a mismatch between the encoder and decoder which typically appears as a visual error on the screen, for example, part of a moving object is "left behind". This error normally persists until it is cleared or "cleaned" with a frame that is not predicted from a previous picture, such as an INTRA-frame.

In a system where a number of decoders are driven from one encoder, it is usually beneficial to insert regular INTRA-frames in the play stream. However, this results in a loss of efficiency to all decoders as the INTRA-frames require a higher bit-rate than motion compensated frames.

Another common technique is to provide adequate buffering at the decoder so that lost packets can be re-transmitted. However, this will produce delays at the decoder which may not be acceptable.

EP 0 763 944 A (OKI ELECTRIC IND CO LTD) 19 March 1997 (1997-03-19) and WIEGAND T ET AL: "ERROR-RESILIENT VIDEO TRANSMISSION USING LONG-TERM MEMORY MOTION-COMPENSATED PREDICTION" IEEE JOURNAL ON SELECTED AREAS IN COMMUNICATIONS, IEEE INC. NEW YORK, US, vol. 18, no. 6, June 2000 (2000-06), pages 1050-1062, XP000915348 ISSN: 0733-8716 disclose a method of transmitting video data comprising the steps of encoding a first sequence of video frames; encoding a second sequence of video frames predicted from a reference frame; transmitting data from said first sequence to a receiver; and on receiving from the receiver an indication that one or more frames in said first sequence is corrupted, transmitting data from the second sequence to the receiver.

Said documents also disclose a method for compensating for transmission errors in a video data stream comprising transmitting a first video data stream from a transmitter to a receiver; detecting corrupted data in the transmitting data stream; line generating an indication that one ore more frames in said first sequence is/are corrupted; and in response to said indication, transmitting data from a second video data stream predicted from a reference frame.

The present invention is directed to overcoming or substantially ameliorating the above problems.

According to a first aspect of the present invention, there is provided a method of transmitting video data, comprising the steps of:
generating a first video data stream:
   generating a second video data stream comprising a plurality of frames each predicted from a reference frame;
   transmitting data from the first stream to a receiver;
   on receiving from the receiver an indication that data in the first stream is corrupted, transmitting data from the second stream to the receiver.

According to a second aspect of the present invention there is provided a method for compensating for transmission errors in a video data stream comprising:
transmitting a first video data stream from a transmitter to a receiver,
detecting corrupted data in the transmitted data stream,
generating an indication that data is corrupted, and
   in response to the indication that the data is corrupted, transmitting data from a second video data stream predicted from a reference frame.

Preferably, the method further comprises reverting to the first video data stream after transmitting the data from the second video data stream.

In a preferred embodiment, the step of detecting corrupted data is carried out at the receiver, and preferably, the step of generating an indication that data is corrupted is carried out at the receiver.

Preferably, the step of generating an indication that data is corrupted includes the receiver generating an indication signal and transmitting the indication signal to the transmitter.

In a preferred embodiment, the step of transmitting data from the second video data stream is performed at the transmitter, the transmitted data from the second video data stream being received by the receiver.

According to a third aspect of the present invention, there is provided apparatus for transmitting video data, comprising:
an encoder for generating a first video data stream, the encoder further arranged for generating a second video data stream comprising a plurality of frames each predicted from a reference frame;
a transmitter for transmitting data from the first stream to a receiver;
means for receiving from the receiver an indication that data in the first stream is corrupted;
the transmitter upon receiving the indication is arranged for transmitting data from the second stream to the receiver.

Preferably, the transmitter is further arranged for reverting back to transmitting data from the first stream after data from the second stream has been transmitted to the receiver.

According to a fourth aspect of the present invention there is provided a system for compensating for transmission errors in a video data stream comprising:
a transmitter for transmitting a first video data stream,
a receiver for receiving the first video data stream,
means for detecting corrupted data in the first data stream, and
means for transmitting data from a second video data stream predicted from a reference frame after detection of corrupted data in the first video data stream.

Preferably, the means for detecting the corrupted data in the first video stream is at the receiver, and, preferably, the transmitter is operable to transmit the data from the second video data stream to the receiver after detection of corrupted data in the first video data stream.

A preferred embodiment of the invention aims to provide a correction without an increase in bandwidth by replacing lost packets of information with packets from a fixed reference side stream, rather than inserting extra INTRA-frames. The invention is defined by the appended claims. The invention will now be described by way of example only with reference to the accompanying drawings, in which:
Figure 1 is a block diagram showing the effect of packet loss in a conventional video streaming system;
Figure 2 is a block diagram showing a conventional frame sequence with INTRA (I) frames inserted;
Figure 3 is a block diagram showing a fixed reference side stream according to an embodiment of the invention in which picture frames are predicted from a single '0^{th'} frame;
Figure 4 is a block diagram showing a frame sequence with feedback to overcome the effects of packet loss; and
Figure 5 is a block diagram showing an example of two data streams using the error correction system and method embodying the present invention.

The transmission of frames of video signals in a conventional system is shown in Figure 1. A transmitter 1 includes a buffer for storing frames 2 to be transmitted and an encoder 4 for encoding packets of data from the frames 2 stored in the buffer. It should be noted that the encoder 4 can run in either of two modes - "live" encoding for when video data comes from a live source, or "off-line" encoding when the encoder 4 may have operated on some archived content, possibly some time before the transmitter is running. In either case, no feedback needs to be sent to the encoder 4. A receiver 5 includes a decoder 6 for decoding packets of information 8 received from the transmitter and producing video frames 10 from these packets of information 8.

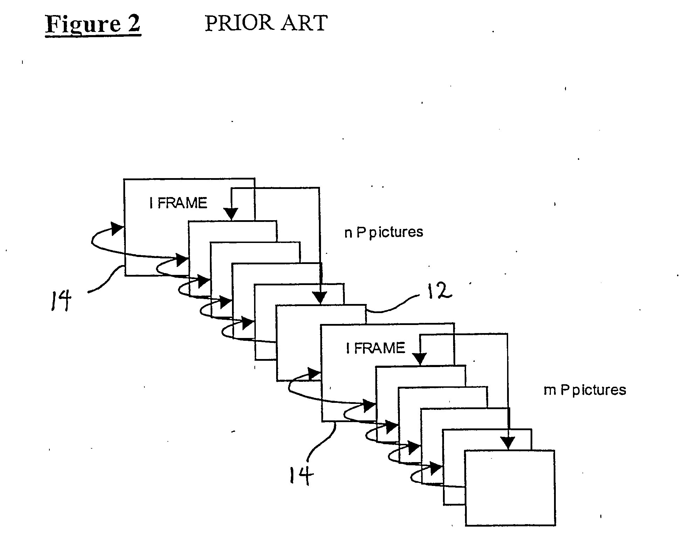

Figure 2 shows a sequence of transmission frames 12 with INTRA frames 14 (also referred to as I-frames) inserted at intervals to clean the picture. This is a standard technique.

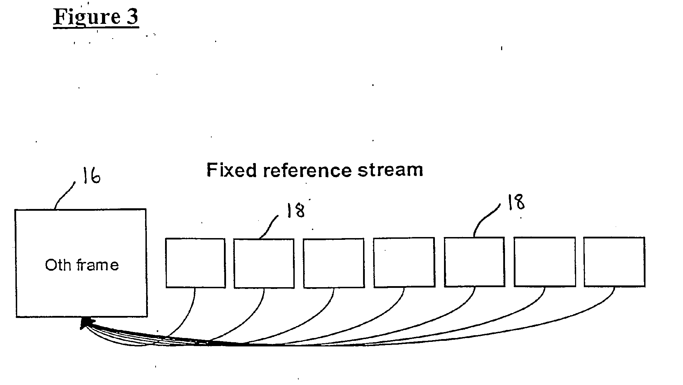

A fixed reference side stream as used in the invention is shown in Figure 3. Each frame (picture) 18 is derived from the same single frame 16, denoted as the '0^{th}' frame. This reference frame 16 may be an INTRA frame, which is produced using known techniques.

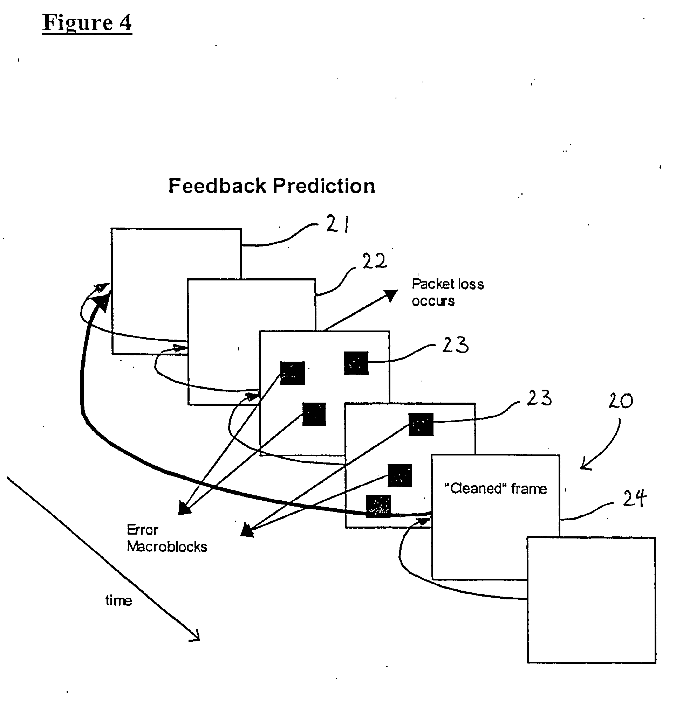

A sequence of frames 20 showing the use of feedback to clean frames after packet loss is illustrated in Figure 4. The sequence of frames 20 comprises an INTRA frame 21 and a series of transmitted compressed frames 22, in at least one of which packet loss or corruption 23 has occurred. The loss or corruption of information is reported back to the transmitter which sends a correcting packet of data from the side stream 32 predicted from the reference frame 21 to produce a cleaned frame 24.

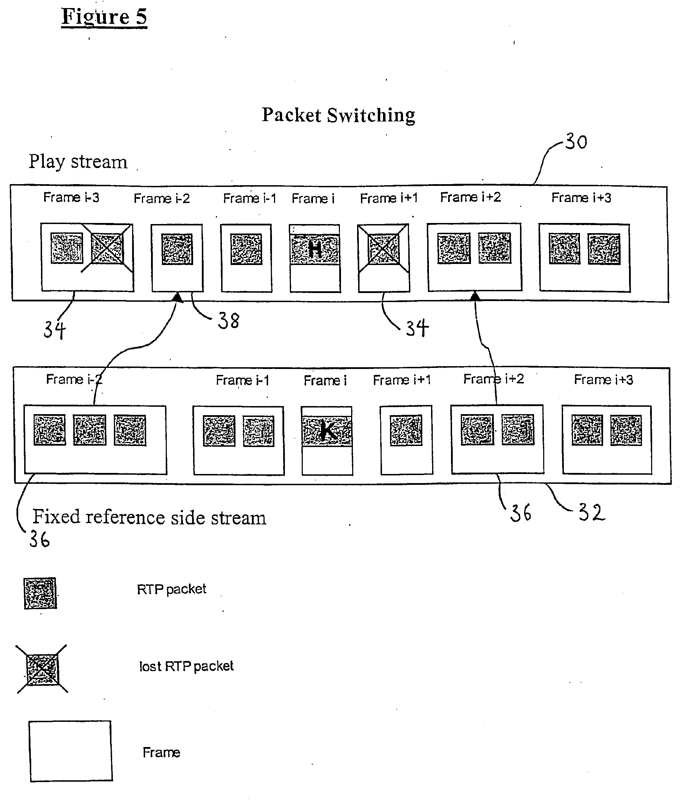

Figure 5 shows a transmitted play stream 30 comprising a series of frames and a corresponding fixed reference side stream 32. A number of frames 34 in the play stream 30 may contain missing or corrupted packets of information. If the receiver detects that a frame is corrupted, for example, when packet loss or corruption has occurred, this is signalled to the transmitter which then transmits packets from the fixed reference side stream 32 to clean the frame, and stop propagation of the errors.

The error compensation process according to a preferred embodiment of the invention will now be described by way of example.

A video signal to be transmitted is stored as a series of frames 2 in a buffer at the transmitter 1. The signal is encoded in the conventional manner by the encoder 4 and is transmitted as a series of packets of data 8 constituting a play stream 30 to one or more receivers 5. At the same time, the transmitter 1 produces a fixed reference side stream 32 in which the frames are all predicted from the same INTRA-frame rather than each being produced from the previous transmitted frame. At the receiver 5, the packets in the play stream 30 are decoded by the decoder 6 to recover the images.

If the receiver detects that a frame 34 is corrupted, for example, when packet loss or corruption has occurred, the receiver 5 sends a signal to the transmitter 1 notifying the transmitter of the error. The transmitter 1 then switches mode and, instead of sending the next packet from the play stream 30, the transmitter 1 sends a corresponding packet from the side stream 32. The packet from the side stream is predicted from a fixed reference frame instead of the preceding play stream frame. Thus, a cleaned frame 24 is produced at the receiver. This is shown in Figures 4 and 5. The system then reverts to the normal play stream 30.

Figure 5 shows how an entire frame's worth of information can be transmitted to produce a cleaned frame for use with subsequent play stream packets. However, the receiver or transmitter could also calculate which parts of the frame are missing or corrupted and transmission of the data from the side stream could be limited to the part of the frame (for example a GOB - group of blocks) necessary to clean the part of the frame containing errors rather than clean the whole frame.

The fixed reference side stream 32 illustrated in figures 3 and 5 differs from the play stream 30 in that all frames in the side stream are predicted from a single previous reference frame (picture), that is, the frames in the side stream 32 are obtained by comparing the current frame with the reference frame. This is in contrast to the play stream 30 in which the current frame is normally compared with the preceding frame in the play stream. The difference between the current frame and the reference frame will be transmitted when the transmitter transmits a frame from the side stream 32, as is the case when the receiver notifies the transmitter of the detection an error. In a preferred embodiment, after receipt of data from the side stream 32, the receiver compares this with the stored reference (INTRA) frame to produce a cleaned current frame. The transmitter then reverts backs to transmitting data from the play stream 30.

The method and system for compensating for transmission errors embodying the invention is particularly advantageous as it does not require large amounts of buffering at the receiver and nor does it require a reduction in efficiency of the play stream to provide error resilience. The process embodying the invention permits decoding to continue once packet loss has occurred without significant delay in the play stream and whilst rebuffering occurs. This is particularly advantageous in low delay applications such as video conferencing applications in which any pause in transmission would be unacceptable. The method and system for compensating for transmission errors embodying the invention aims to provide quick recovery from loss or corruption and to minimise loss in quality which would result if conventional I-frames were used. Furthermore, the quality of the play stream is not compromised to provide extra resilience.

The invention is not intended to be limited to the video coding protocol or compression schemes mentioned above and in the drawings which are intended to be merely exemplary. The invention is applicable to any video coding protocol using temporal prediction, such as MPEG4 and H.263. Furthermore, whilst the invention has been described as being applicable to compensate for errors due to packet loss, it may also be applied to compensate for bit errors.

## Claims

1. A method of transmitting video data, comprising the steps of:
encoding a first sequence of video frames;
encoding a second sequence of video frames corresponding to said first sequence of video frames, all video frames in said second sequence predicted from a single reference frame;
transmitting data from said first sequence to a receiver;
on receiving from the receiver an indication that one or more frames in said first sequence is corrupted, transmitting data corresponding to said one or more corrupted frames to the receiver from said second sequence of frames.

2. A method according to claim 1, further comprising:
reverting back to transmitting data from said first sequence after data from the second sequence has been transmitted to the receiver.

3. A method of compensating for transmission errors in a video data signal comprising:
transmitting a first sequence of video frames from a transmitter to a receiver,
detecting one or more corrupted frames in said first sequence;
generating an indication that one or more frames in said first sequence is/are corrupted;
in response to said indication, transmitting frames corresponding to said one or more corrupted frames from a second sequence of video frames, said second sequence corresponding to said first sequence, all video frames in said second sequence predicted from a single reference frame.

4. A method according to claim 3, further comprising reverting back to transmitting frames from said first sequence after frames have been transmitted to the receiver from the second sequence.

5. A method according to claim 3 or 4, wherein the step of detecting corrupted frames is carried out at the receiver.

6. A method according to any of claims 3 to 5, wherein the step of generating an indication that frames are corrupted is carried out at the receiver.

7. A method according to any of claims 3 to 6, wherein the step of generating an indication that frames are corrupted includes the receiver generating an indication signal and transmitting the indication signal to the transmitter.

8. A method according to any of claims 3 to 7, wherein the step of transmitting frames from said second sequence is performed at the transmitter, the transmitted frames from said second sequence being received by the receiver.

9. A storage medium carrying computer readable code representing instructions for causing one or more processors to perform the method according to any of claims 1 to 8 when the instructions are executed by the processor or processors.

10. A computer program comprising instructions for causing one or more processors to perform the method according to any of claims 1 to 8 when the instructions are executed by the processor or processors.

11. A computer data signal embodied in a carrier wave and representing instructions for causing one or more processors to perform the method according to any of claims I to 8 when the instructions are executed by the processor or processors.

12. Apparatus for transmitting video data, comprising:
an encoder for encoding a first sequence of video frames, the encoder further arranged for encoding a second sequence of video frames corresponding to said first sequence, all video frames in said second sequence predicted from a single reference frame;
a transmitter for transmitting frames from said first sequence to a receiver;
means for receiving from the receiver an indication that one or more frames in said first sequence is/are corrupted;
wherein said transmitter is arranged in operation to transmit frames corresponding to said one or more corrupted frames from said second sequence to said receiver, upon receiving said indication.

13. Apparatus according to claim 12, the transmitter being further arranged in operation to revert back to transmitting frames from said first sequence after frames have been transmitted to the receiver from the second sequence.

14. A system for compensating for transmission errors in a video data signal comprising:
a transmitter for transmitting a first sequence of video frames;
a receiver for receiving said first sequence;
means for detecting one or more corrupted frames in said first sequence;
means for transmitting frames corresponding to said one or more corrupted frames from a second sequence of video frames, said second sequence corresponding to said first sequence, all video frames in said second sequence predicted from a single reference frame.

15. A system according to claim 14, wherein the means for detecting corrupted frames in said first sequence is at the receiver.

16. A system according to claim 14 or 15, wherein the transmitter is operable to transmit frames from said second sequence to the receiver after detection of one or more corrupted frames in said first sequence.

17. A storage medium carrying computer readable code representing instructions for causing one or more processors to operate as the system according to any of claims 12 to 16 when the instructions are executed by the processor or processors.

18. A computer program comprising instructions for causing one or more processors to operate as the system according to any of claims 12 to 16 when the instructions are executed by the processor or processors.

19. A computer data signal embodied in a carrier wave and representing instructions for causing one or more processors to operate as the system according to any of claims 12 to 16 when the instructions are executed by the processor or processors.

## Patentansprüche

1. Verfahren zum Übertragen von Videodaten mit den folgenden Schritten:
Kodieren einer ersten Sequenz von Videoeinzelbildern;
Kodieren einer zweiten Sequenz von Videoeinzelbildern, die der ersten Sequenz von Videoeinzelbildern entspricht, wobei alle Videoeinzelbilder in der zweiten Sequenz aus einem einzigen Bezugseinzelbild vorhergesagt sind;
Übertragen von Daten aus der ersten Sequenz zu einem Empfänger;
beim Empfangen einer Anzeige von dem Empfänger, dass eines oder mehrere Einzelbilder in der ersten Sequenz beschädigt ist, Übertragen von Daten, die dem einen oder den mehreren beschädigten Einzelbildern entsprechen, aus der zweiten Sequenz von Einzelbildern an den Empfänger.

2. Verfahren nach Anspruch 1, weiterhin mit:
Zurückkehren zum Übertragen von Daten aus der ersten Sequenz, nachdem Daten aus der zweiten Sequenz an den Empfänger übertragen worden sind.

3. Verfahren zum Kompensieren von Übertragungsfehlern in einem Videodatensignal, mit:
Übertragen einer ersten Sequenz von Videoeinzelbildern von einem Sender an einen Empfänger,
Erfassen von einem oder mehreren beschädigten Einzelbildern in der ersten Sequenz;
Erzeugen einer Anzeige, dass eines oder mehrere Einzelbilder in der ersten Sequenz beschädigt ist/ sind;
als Reaktion auf die Anzeige, Übertragen von Einzelbildern, die dem einen oder den mehreren beschädigten Einzelbildern aus der zweiten Sequenz von Videoeinzelbildern entsprechen, wobei die zweite Sequenz der ersten Sequenz entspricht und alle Videoeinzelbilder in der zweiten Sequenz aus einem einzigen Bezugseinzelbild vorhergesagt sind.

4. Verfahren nach Anspruch 3, weiterhin mit dem Zurückkehren zum Übertragen von Einzelbildern aus der ersten Sequenz, nachdem Einzelbilder aus der zweiten Sequenz an den Empfänger übertragen worden sind.

5. Verfahren nach Anspruch 3 oder 4, wobei der Schritt des Erfassens beschädigter Einzelbilder am Empfänger ausgeführt wird.

6. Verfahren nach irgendeinem der Ansprüche 3 bis 5, wobei der Schritt des Erzeugens einer Anzeige, dass Einzelbilder beschädigt sind, am Empfänger ausgeführt wird.

7. Verfahren nach irgendeinem der Ansprüche 3 bis 6, wobei der Schritt des Erzeugens einer Anzeige, dass Einzelbilder beschädigt sind, einschließt, dass der Empfänger ein Anzeigesignal erzeugt und das Anzeigesignal an den Sender überträgt.

8. Verfahren nach irgendeinem der Ansprüche 3 bis 7, wobei der Schritt des Übertragens von Einzelbildern aus der zweiten Sequenz am Sender durchgeführt wird, wobei die übertragenen Einzelbilder aus der zweiten Sequenz vom Empfänger empfangen werden.

9. Speichermedium, das einen computerlesbaren Code trägt, der Anweisungen repräsentiert, um einen oder mehrere Prozessoren zu veranlassen, das Verfahren nach irgendeinem der Ansprüche 1 bis 8 durchzuführen, wenn die Anweisungen von dem Prozessor oder den Prozessoren ausgeführt werden.

10. Computerprogramm, das Anweisungen umfasst, um einen oder mehrere Prozessoren zu veranlassen, das Verfahren nach irgendeinem der Ansprüche 1 bis 8 durchzuführen, wenn die Anweisungen von dem Prozessor oder den Prozessoren ausgeführt werden.

11. Computerdatensignal, das in einer Trägerwelle eingebettet ist und Anweisungen repräsentiert, um einen oder mehrere Prozessoren zu veranlassen, das Verfahren nach irgendeinem der Ansprüche 1 bis 8 durchzuführen, wenn die Anweisungen von dem Prozessor oder den Prozessoren ausgeführt werden.

12. Vorrichtung zum Übertragen von Videodaten, mit:
einem Kodierer zum Kodieren einer ersten Sequenz von Videoeinzelbildern, wobei der Kodierer weiterhin zum Kodieren einer zweiten Sequenz von Videoeinzelbildern angeordnet ist, die der ersten Sequenz entsprechen, wobei alle Videoeinzelbilder in der zweiten Sequenz aus einem einzigen Bezugseinzelbild vorhergesagt sind;
einem Sender zum Übertragen von Einzelbildern von der ersten Sequenz an einen Empfänger;
einem Mittel zum Empfangen einer Anzeige von dem Empfänger, dass ein oder mehrere Einzelbilder in der ersten Sequenz beschädigt ist/ sind;
wobei der Sender dazu angeordnet ist, im Betrieb Einzelbilder, die dem einen oder den mehreren beschädigten Einzelbildern entsprechen, aus der zweiten Sequenz bei Empfang der Anzeige an den Empfänger zu übertragen.

13. Vorrichtung nach Anspruch 12, wobei der Sender weiterhin dazu angeordnet ist, im Betrieb zum Übertragen von Einzelbildern aus der ersten Sequenz zurückzukehren, nachdem Einzelbilder aus der zweiten Sequenz an den Empfänger übertragen worden sind.

14. System zum Kompensieren von Übertragungsfehlern in einem Videodatensignal, mit:
einem Sender zum Übertragen einer ersten Sequenz von Videoeinzelbildern;
einem Empfänger zum Empfangen der ersten Sequenz;
einem Mittel zum Erfassen eines oder mehrerer beschädigter Einzelbilder in der ersten Sequenz;
einem Mittel zum Übertragen von Einzelbildern, die dem einen oder den mehreren beschädigten Einzelbildern entsprechen, aus einer zweiten Sequenz von Videoeinzelbildern, wobei die zweite Sequenz der ersten Sequenz entspricht und alle Videoeinzelbilder in der zweiten Sequenz aus einem einzigen Bezugseinzelbild vorhergesagt sind.

15. System nach Anspruch 14, wobei sich das Mittel zum Erfassen von beschädigten Einzelbildern in der ersten Sequenz am Empfänger befindet.

16. System nach Anspruch 14 oder 15, wobei der Sender dazu betätigbar ist, nach der Erfassung von einem oder mehreren beschädigten Einzelbildern in der ersten Sequenz Einzelbilder aus der zweiten Sequenz an den Empfänger zu übertragen.

17. Speichermedium, das einen computerlesbaren Code trägt, der Anweisungen repräsentiert, um einen oder mehrere Prozessoren zu veranlassen, als das System nach irgendeinem der Ansprüche 12 bis 16 zu arbeiten, wenn die Anweisungen von dem Prozessor oder den Prozessoren ausgeführt werden.

18. Computerprogramm mit Anweisungen, um einen oder mehrere Prozessoren zu veranlassen, als das System nach irgendeinem der Ansprüche 12 bis 16 zu arbeiten, wenn die Anweisungen von dem Prozessor oder den Prozessoren ausgeführt werden.

19. Computerdatensignal, das in einer Trägerwelle eingebettet ist und Anweisungen repräsentiert, um einen oder mehrere Prozessoren zu veranlassen, als das System nach irgendeinem der Ansprüche 12 bis 16 zu arbeiten, wenn die Anweisungen von dem Prozessor oder den Prozessoren ausgeführt werden.

## Revendications

1. Procédé de transmission de données vidéo, comprenant les étapes consistant à :
coder une première séquence de trames vidéo ;
coder une deuxième séquence de trames vidéo correspondant à ladite première séquence de trames vidéo, toutes les trames vidéo dans ladite deuxième séquence étant prédites à partir d'une trame de référence unique ;
transmettre des données de ladite première séquence à un récepteur ;
à la réception par le récepteur d'une indication selon laquelle une ou plusieurs trames dans ladite première séquence est corrompue, transmettre au récepteur des données correspondant à ladite une ou plusieurs trames corrompues, à partir de ladite deuxième séquence de trames.

2. Procédé selon la revendication 1, comprenant en outre :
le retour à la transmission de données depuis ladite première séquence après que des données provenant de la deuxième séquence ont été transmises au récepteur.

3. Procédé de compensation d'erreurs de transmission dans un signal de données vidéo, comprenant :
la transmission d'une première séquence de trames vidéo, d'un émetteur à un récepteur,
la détection d'une ou plusieurs trames corrompues dans ladite première séquence ;
la génération d'une indication selon laquelle une ou plusieurs trames situées dans ladite première séquence est/sont corrompues ;
en réponse à ladite indication, la transmission de trames correspondant auxdites une ou plusieurs trames corrompues, à partir d'une première séquence de trames vidéo, ladite deuxième séquence correspondant à ladite première séquence, toutes les trames vidéo dans ladite deuxième séquence étant prédites à partir d'une trame de référence unique.

4. Procédé selon la revendication 3, comprenant en outre le retour à la transmission de trames depuis ladite première séquence, après que des trames provenant de la deuxième séquence ont été transmises au récepteur.

5. Procédé selon la revendication 3 ou 4, dans lequel l'étape de détection de trames corrompues est effectuée au niveau du récepteur.

6. Procédé selon l'une quelconque des revendications 3 à 5, dans lequel l'étape de génération d'une indication selon laquelle des trames sont corrompues est effectuée au niveau du récepteur.

7. Procédé selon l'une quelconque des revendications 3 à 6, dans lequel l'étape de génération d'une indication selon laquelle des trames sont corrompues comprend la génération, par le récepteur, d'un signal d'indication et de transmission du signal d'indication à l'émetteur.

8. Procédé selon l'une quelconque des revendications 3 à 7, dans lequel l'étape de transmission de trames provenant de ladite deuxième séquence est accomplie au niveau de l'émetteur, les trames transmises, provenant de ladite deuxième séquence, étant reçues par le récepteur.

9. Support de stockage, portant du code lisible par ordinateur, représentant des instructions pour qu'un ou plusieurs processeurs mettent en oeuvre le procédé selon l'une quelconque des revendications 1 à 8, lorsque les instructions sont exécutées par le processeur ou les processeurs.

10. Programme informatique, comprenant des instructions pour qu'un ou plusieurs processeurs mettent en oeuvre le procédé selon l'une quelconque des revendications 1 à 8, lorsque les instructions sont exécutées par le processeur ou les processeurs.

11. Signal de données informatiques, mis en oeuvre dans une onde porteuse et représentant des instructions pour qu'un ou plusieurs processeurs mettent en oeuvre le procédé selon l'une quelconque des revendications 1 à 8, lorsque les instructions sont exécutées par le processeur ou les processeurs.

12. Appareil pour transmettre des données vidéo, comprenant :
un codeur, pour coder une première séquence de trames vidéo, le codeur étant en outre agencé pour coder une deuxième séquence de trames vidéo correspondant à ladite première séquence, toutes les trames vidéo situées dans ladite deuxième séquence étant prédites à partir d'une trame de référence unique ;
un émetteur, pour émettre des trames depuis ladite première séquence à un récepteur ;
des moyens, pour recevoir du récepteur une indication selon laquelle une ou plusieurs trames dans ladite première séquence est/sont corrompues ;
dans lequel ledit émetteur est agencé, en fonctionnement, pour émettre des trames correspondant auxdites une ou plusieurs trames corrompues, provenant de ladite deuxième séquence, audit récepteur, à la réception de ladite indication.

13. Appareil selon la revendication 12, l'émetteur étant en outre agencé en fonctionnement pour le retour à la transmission de trames de ladite première séquence, après que des trames provenant de la deuxième séquence ont été transmises au récepteur.

14. Système pour compenser des erreurs de transmission dans un signal de données vidéo, comprenant :
un émetteur, pour émettre une première séquence de trames vidéo ;
un récepteur, pour recevoir ladite première séquence ;
des moyens, pour détecter une ou plusieurs trames corrompues dans ladite première séquence ;
des moyens, pour émettre des trames correspondant auxdites une ou plusieurs trames corrompues, à partir d'une deuxième séquence de trames vidéo, ladite deuxième séquence correspondant à ladite première séquence, toutes les trames vidéo situées dans ladite deuxième séquence étant prédites à partir d'une trame de référence unique.

15. Système selon la revendication 14, dans lequel les moyens de détection de trames corrompues dans ladite première séquence sont au niveau du récepteur.

16. Système selon la revendication 14 ou 15, dans lequel l'émetteur est susceptible de fonctionner pour transmettre au récepteur des trames à partir de ladite deuxième séquence, après détection d'une ou plusieurs trames corrompues dans ladite première séquence.

17. Support de stockage, portant du code lisible par ordinateur, représentant des instructions pour qu'un ou plusieurs processeurs fonctionne(nt) comme le système selon l'une quelconque des revendications 12 à 16, lorsque les instructions sont exécutées par le processeur ou les processeurs.

18. Programme informatique, comprenant des instructions pour qu'un ou plusieurs processeurs fonctionne(nt) comme le système selon l'une quelconque des revendications 12 à 16, lorsque les instructions sont exécutées par le processeur ou les processeurs.

19. Signal de données informatiques, mis en oeuvre dans une onde porteuse et représentant des instructions pour qu'un ou plusieurs processeurs fonctionne(nt) comme le système selon l'une quelconque des revendications 12 à 16, lorsque les instructions sont exécutées par le processeur ou les processeurs.
